Europäisches Patentamt

European Patent Office

Office européen des brevets

(19)

(11) Veröffentlichungsnummer: **0 075 778**
**B1**

(12) # EUROPÄISCHE PATENTSCHRIFT

(45) Veröffentlichungstag der Patentschrift:
20.04.88

(51) Int. Cl.⁴: **H 02 B 1/12**

(21) Anmeldenummer: **82108443.1**

(22) Anmeldetag: **13.09.82**

(54) Wasserdichtes Isollerstoffgehäuse.

(30) Priorität: **24.09.81 DE 3138041**

(43) Veröffentlichungstag der Anmeldung:
**06.04.83 Patentblatt 83/14**

(45) Bekanntmachung des Hinweises auf die Patenterteilung:
**20.04.88 Patentblatt 88/16**

(84) Benannte Vertragsstaaten:
**DE SE**

(56) Entgegenhaltungen:
**DE - A - 1 640 302**
**DE - A - 2 824 477**
**DE - B - 1 194 476**
**DE - C - 79 661**
**GB - A - 548 497**

(73) Patentinhaber: **Siemens Aktiengesellschaft Berlin und München, Wittelsbacherplatz 2, D-8000 München 2 (DE)**

(72) Erfinder: **Jehnich, Ferdinand, Fichtenstrasse 14, D-8411 Laaber (DE)**

**Beschreibung**

Die Erfindung bezieht sich auf ein wasserdichtes Isolierstoffgehäuse zur leicht zugänglichen Aufnahme von Installationsgeräten, beispielsweise von Geräten mit dem Profil von Leitungsschutzschaltern bzw. Fehlerstromschutzschaltern, die in der Regel auf Tragschienen gehalten werden, das auf einem Basisteil eine Haube mit Klappdeckel aufweist.

Zum Montieren kann die Haube vom Basisteil abgeschraubt werden. Nach der Montage bleibt ein leichter Zugriff zu den Installationsgeräten, indem man die Klappe des Isolierstoffgehäuses anhebt (DE-U-76 09 268). Bisher war es erforderlich, zwischen Klappdeckel und Haube besondere Dichtungsgummi aufzukleben, was vom Material her und von der Montage aufwendig ist. Dennoch hat die Dichtung unter bestimmten Betriebsbedingungen nicht befriedigt.

An ein wasserdichtes und staubdichtes Gehäuse werden heute erhöhte Anforderungen gestellt, wie sie beispielsweise unter der Schutzart IP 54 niedergelegt sind.

Der Erfindung liegt die Aufgabe zugrunde, ein wasser- und staubdichtes Isolierstoffgehäuse zu entwickeln, das leicht zugänglich ist, auch ohne Dichtgummi oder eine der Gummidichtung nachgebildeten Dichtungstechnik, besonders dicht ist und sich besonders leicht montieren und handhaben lässt.

Die Lösung der geschilderten Aufgabe besteht nach der Erfindung darin, dass der Rand des Klappdeckels mit Stegen versehen ist, die sich mit hierzu versetzten Stegen an der Haube derart verzahnen, dass zumindest zwei gegenüberstehende Stege an einer ihrer Flanken einander berühren und dass hierzu vorgelagerte Stege Spiel gegeneinander belassen.

Ein solches Isolierstoffgehäuse kann in Spritzgusstechnik aus Thermoplast hergestellt werden. Es ist keine besondere Gummidichtung aufzukleben und man braucht eine solche Dichtung auch nicht während des Betriebs gegen ein Verkleben zum Partnerteil des Verschlusses zu schützen. Eine solche Dichtung braucht also beispielsweise nicht talkumiert zu werden.

Um eine Gummidichtung nachzubilden, ist es bekannt (DE-B-1 194 476), eine Nut in einem Deckel aus starrem Material vorzusehen, die einen elastischen Rand in einem Unterteil aus entsprechend elastischem Material umgreifend und flächig berührend aufnimmt. Erfindungsgemäss können dagegen gleichartig starre Materialien für Deckel und Unterteil verwandt werden. Es genügt, das zwei gegenüberstehende Stege an einer ihrer Flanken einander berühren. Sie brauchen sich nicht flächig berührend zu umgreifen.

Wenn sich also zumindest zwei gegenüberliegende Stege an einer ihrer Flanken einander berühren, können hierzu vorgelagerte Stege Spiel gegeneinander belassen. Die einander berührenden Flanken können dabei im Presssitz dichten oder nach der Wirkungsweise eines Adhäsionsverschlusses arbeiten. Die auf beiden Seiten vorgelagerten Stege wirken auf der Seite, von der Wasser oder Staub einwirkt, als Grobabweiser und auf der anderen Seite als eine Falle für etwaig dennoch durchgedrungenes Medium. Hierdurch wird auch sichergestellt, dass nur zwei, oder jedenfalls wenige, Stege einander berühren und dass die übrigen Stege nicht besonders sorgfältig hinsichtlich der Toleranz ausgebildet zu sein brauchen. Andererseits wird dadurch auch die Bedienung des Klappdeckels erleichtert.

Es ist günstig, wenn die einander berührenden Stege zumindest auf einer Berührungssseite eine schräg zur Deckelebene ausgebildete Flanke aufweisen. Dadurch wird besonders toleranzunempfindlich sichergestellt, dass sich verzahnende Stege berühren können.

Wenn die Stege auf einer Anordnungsseite in Richtung zum Deckelrand gesehen eine abnehmende Steghöhe aufweisen, lässt sich in besonders einfacher Weise das Toleranzproblem ausschalten und eine sichere Berührung einander verzahnender Stege erzielen.

Nach dem Prinzip der verzahnenden Stege kann auch die Haube an ihrem Rand mit Stegen versehen sein, die mit Stegen am Rand des Basisteils miteinander in Formschluss stehen. Dadurch kann bei Presssitz durch konventionelle Verschraubung ohne zusätzliche Dichtungsmittel eine einfache und wirkungsvolle Dichtung erzielt werden.

Die Erfindung soll anhand eines in der Zeichnung grob schematisch wiedergegebenen Ausführungsbeispiels näher erläutert werden:

In Fig. 1 ist ein Isolierstoffgehäuse bei Schnitt durch die Achse des Klappdeckels wiedergegeben.

In Fig. 2 ist die Aufsicht auf ein Isolierstoffgehäuse nach Fig. 1 dargestellt.

In Fig. 3 ist das Isolierstoffgehäuse nach Fig. 2 bei Ansicht von der Schmalseite wiedergegeben.

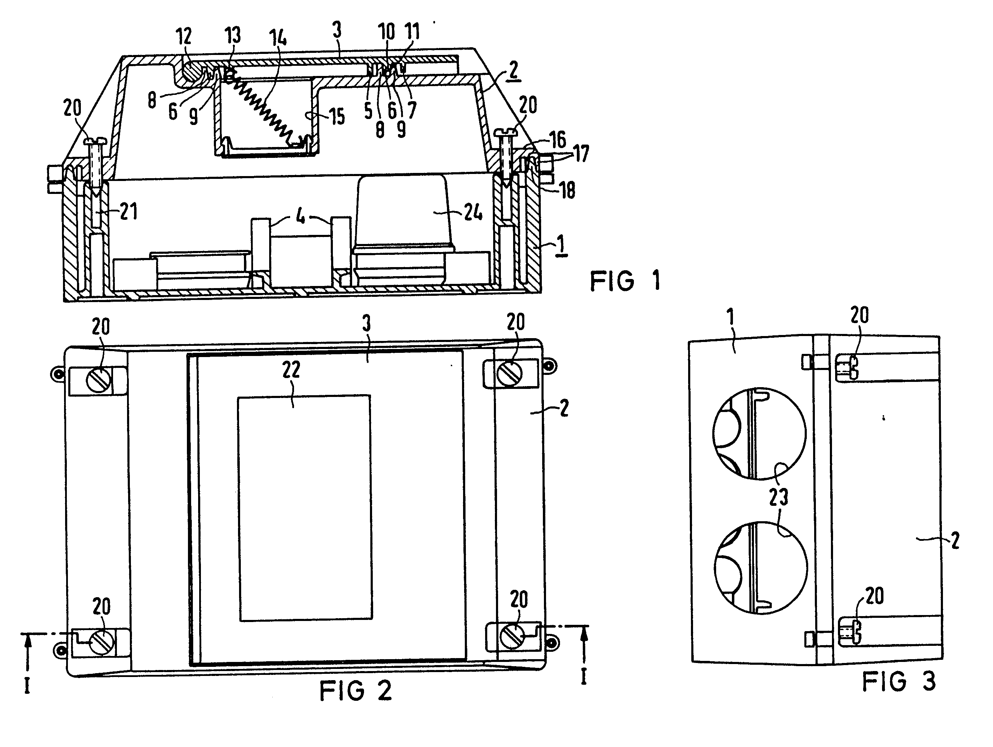

Das Isolierstoffgehäuse nach Fig. 1 besteht im wesentlichen aus einem Basisteil 1 und einer Haube 2 mit Klappdeckel 3. Am Basisteil können in bekannter Weise Tragschienen 4 für Installationsgeräte angeordnet oder ausgebildet sein. Solche Tragschienen können also direkt aus dem Boden des Isolierstoffgehäuses ausgebildet sein. Der Rand des Klappdeckels 3 ist an drei Seiten umlaufend mit Stegen 5, 6 und 7 versehen, die sich mit hierzu versetzten Stegen 8, 9 an der Haube 2 verzahnen. Zwei gegenüberstehende Stege 6 und 9 berühren sich einander an ihren Flanken 10 und 11. Im Ausführungsbeispiel berühren sich auch die Stege 6 und 8 an ihren Flanken. Zu den einander berührenden 6 und 9 bzw. 6 und 8 Stegen sind Stege 5 und 7 auf beiden Seiten vorgelagert, die Spiel zu den gegenüberstehenden Stegen belassen.

Solche wechselseitig verzahnten Stege können am Klappdeckel 3 rundum angeordnet sein. In der Praxis genügt es, wenn an der Seite der Achse 12 wegen des erhöhten Anpressdrucks die Dichtung einfacher ausgebildet ist. Im Ausführungsbeispiel ist vor allem sichergestellt, dass sich die Stege 6 und 9 an ihren Flanken berühren. Auf der Aussenseite wirkt die walzenförmige Achse 12, die in einer runden Ausnehmung der Haube 2 läuft, als vorgelagerter Steg und auf der anderen Seite wirkt ein Steg 13 als vorgelagerter Steg, an dem in Durchgriffen eine Zugfeder 14 in einem Senkkasten 15 angeordnet ist.

Die einander berührenden Stege 6, 8 und 9 sind auf den zwei im Ausführungsbeispiel entstehenden Berührungsseiten schräg zur Deckelebene, also zur Haupterstreckungsebene des Deckels 3, ausgebildet. Ihre Flanken stehen also jeweils schräg auf dieser Ebene. Die Stege sind auf einer Anordnungsseite, im Ausführungsbeispiel auf der Deckelseite, in richtung zum Deckelrand gesehen mit abnehmender Steghöhe ausgebildet. Dadurch steht ein innen vorgelagerter Steg, beispielsweise der teg 5, auf der Haube auf und der aussen vorgelagerte Steg 7 hebt sich etwas von der Haube ab. Der innen vorgelagerte Steg 5 bildet mit seinem Zwischenraum zum Steg 8 eine Falle für etwa dennoch eingedrungenes Medium, wie Wasser oder Staub.

Die Haube 2 ist an ihrem Rand 16 auch mit Stegen 17 versehen, die am Rand des Basisteils 1 mit einem steg 18 in Formschluss stehen.

Basisteil 1 und Haube 2 können durch selbstführende Blechschrauben 20 miteinander verschraubt werden, wobei sich diese Schrauben in der zugeordneten Ausnehmung 21 selbst Gewinde im Isolierstoff schneiden.

Im Deckel 3 kann nach Fig. 2 ein Sichtbereich 22 ausgebildet sein,wozu beispielsweise ein Deckel aus durchsichtigem Material in seinem übrigen Bereich mattiert sein kann.

Zweckmässigerweise können am Basisteil 1 Ausnehmungen 23 ausgebildet sein, die durch Würgenippel 24 verschlossen werden können, die man in das Gehäuse bei der Lieferung einlegen kann.

**Patentansprüche**

1. Wasserdichtes Isolierstoffgehäuse zur leichten zugänglichen Aufnahme von Installationsgeräten, beispielsweise von Geräten mit dem Profil von Leitungsschutzschaltern bzw. Fehlerstromschutzschaltern, die in der Regel auf Tragschienen (4) gehalten werden, das auf einem Basisteil (1) eine Haube (2) mit Klappdeckel (3) aufweist, dadurch gekennzeichnet, dass der Rand des Klappdeckels (3) mit Stegen (5, 6, 7) versehen ist, die sich mit hierzu versetzten Stegen (8, 9) an der Haube (2) derart verzahnen, dass zumindest zwei gegenüberstehende Stege (6; 8, 9) an einer ihrer Flanken (10, 11) einander berühren und dass hierzu vorgelagerte Stege (5, 7) Spiel gegeneinander belassen.

2. Isolierstoffgehäuse nach Anspruch 1, dadurch gekennzeichnet, dass die einander berührenden Stege (6; 8, 9) zumindest auf einer Berührungsseite eine schräg zur Deckelebene ausgebildete Flanke (10, 11) aufweisen.

3. Isolierstoffgehäuse nach Anspruch 2, dadurch gekennzeichnet, dass die Stege (5, 6, 7) auf einer Anordnungsseite in Richtung zum Deckelrand gesehen abnehmende Steghöhe aufweisen.

4. Isolierstoffgehäuse nach Anspruch 1, dadurch gekennzeichnet, dass die Haube (2) an ihrem Rand (16) mit Stegen (17) versehen ist, die mit Stegen (18) am Rand des Basisteils (1) miteinander in Formschluss stehen.

**Claims**

1. Water-tight housing of insulating material for the easily accessible mounting of installation devices, for example devices with the shape of mains circuit breakers or earth leakage circuit breakers, which are generally retained on carrier rails (4), which has a hood (2) with a hinged lid (3) on a base part (1), characterised in that the edge of the hinged lid (3) is provided with ridges (5, 6, 7) which interlock with ridges (8, 9) on the hood (2) offset with respect to them so that at least two opposite ridges (6; 8, 9) touch each other at one of their sides (10, 11) and in that ridges (5, 7) located in front of them allow clearance with respect to each other.

2. Insulating material housing according to claim 1, characterised in that at least on one contact side the touching ridges (6; 8, 9) have a side (10, 11) inclined to the plane of the lid.

3. Insulating material housing according to claim 2, characterised in that the ridges (5, 6, 7) on one side of the arrangement decrease in height in the direction towards the edge of the lid.

4. Insulating material housing according to claim 1, characterised in that the hood (2) is provided with ridges (17) on its edge (16) which are in form-fitting engagement with ridges (18) on the edge of the base part (1).

**Revendications**

1. Boîtier étanche à l'eau, réalisé avec un matériau isolant et destiné à recevoir, avec accès facile, des appareillages électriques, par exemple des appareils ayant le profil de disjoncteurs de protection de puissance ou de disjoncteurs de protection à courant de défaut qui sont, en règle générale montés sur des barreaux de support, boîtier qui comporte sur un socle (1) un capot (2) . à couvercle rabattable (3), caractérisé par le fait que le couvercle rabattable (3) est pourvu de barrettes (5, 6, 7) qui engrènent avec des barrettes (8, 9) ménagées sur le capot (2) et décalées par rapport aux précédentes de manière qu'au moins deux barrettes opposées (6; 8, 9) se touchent sur l'un de leurs flancs (10, 11) et que des barrettes (5, 7) placées à l'avant de ces dernières laissent apparaître un jeu entre elles.

2. Boîtier en matériau isolant selon la revendication 1, caractérisé par le fait que des barrettes (6; 8, 9) qui se touchent comportent sur un côté de contact un flanc (10, 11) qui s'étend obliquement par rapport au plan du couvercle.

3. Boîtier en matériau isolant selon la revendication 2, caractérisé par le fait que les barrettes (5, 6, 7) présentent sur un côté de l'agencement des hauteurs décroissantes des barrettes dans le sens menant au bord du couvercle.

4. Boîtier en matériau isolant selon la revendication 1, caractérisé par le fait que le capot (2) est pourvu sur son bord de barrettes (17) en liaison par formes complémentaires avec des barrettes (18) du bord du socle (1).

FIG 1

FIG 2

FIG 3

0 075 778